(19) **Europäisches Patentamt**

**European Patent Office**

**Office européen des brevets**

(11) **EP 0 873 886 B1**

(12) **EUROPÄISCHE PATENTSCHRIFT**

(45) Veröffentlichungstag und Bekanntmachung des Hinweises auf die Patenterteilung:
**11.12.2002  Patentblatt 2002/50**

(51) Int Cl.⁷: $B60C\ 11/24$, $G01B\ 21/18$

(21) Anmeldenummer: **98107150.9**

(22) Anmeldetag: **20.04.1998**

(54) **Verfahren zum Ermitteln der Profiltiefe eines Fahrzeugreifens am fahrenden Fahrzeug**

Method for determining the tread depth of a vehicle tyre during running

Procédé de détermination de la profondeur du profil d'un pneu de véhicule en marche

(84) Benannte Vertragsstaaten:
**DE FR GB IT SE**

(30) Priorität: **21.04.1997  DE 19716586**

(43) Veröffentlichungstag der Anmeldung:
**28.10.1998  Patentblatt 1998/44**

(73) Patentinhaber: **Continental Aktiengesellschaft 30165 Hannover (DE)**

(72) Erfinder: **Oldenettel, Holger
30826 Garbsen (DE)**

(56) Entgegenhaltungen:
**EP-A- 0 636 503        DE-A- 2 524 463
DE-A- 3 236 520        DE-A- 4 435 160
DE-A- 19 523 917**

EP 0 873 886 B1

**Beschreibung**

Gegenstand der Erfindung ist ein Verfahren zum Ermitteln der Profiltiefe eines Fahrzeugreifens am fahrenden Fahrzeug.

Aus der DE 195 23 917 A1 ist ein Verfahren zum Ermitteln der Profiltiefe eines Fahrzeugreifens am fahrenden Fahrzeug entnehmbar, wobei aus den Meßwerten für die Fahrzeuggeschwindigkeit und den Meßwerten von Nässesensoren, die das von dem Reifen hochgeschleuderte Schleppwasser beim Fahren auf nasser Fahrbahn erfassen, unter Zuhilfenahme eines Kennlinienfeldes die Profiltiefe des Fahrzeugreifens ermittelt wird.

Aus der DE 32 36 520 A1 ist ein Verfahren zum Ermitteln der Profiltiefe von Fahrzeugreifen am fahrenden Fahrzeug entnehmbar, wobei aus den Meßwerten von Drehzahlsensoren an den Rädern und den von einem Referenzgeschwindigkeitsbildner gelieferten Werten auf Langzeitänderungen des Reifenzustandes (Reifenabrieb) und somit auf die aktuelle Profiltiefe geschlossen wird.

In der DE 195 14 219 A1 wird ein Verfahren zur Ermittlung der Profiltiefe der Reifen eines Fahrzeugs beschrieben, bei dem ausgehend von einer Ausgangsprofiltiefe $Pt_o$, einem spezifischen Reifenverschleiß, in den eine laufend aus während der Fahrt über diverse Sensormeßwerte ermittelte fahrstilproportionale Größe SK1 eingeht, und aus der zurückgelegten Wegstrecke der Momentanwert der Profiltiefe bestimmt wird.

Aus der DE-OS 44 35 160 A1 ist eine Einrichtung zur Ermittlung der Umfangskraft eines Fahrzeugrades bekannt, die berührungslos arbeitet. Dabei ist mindestens ein in der Seitenwand des Reifens angeordnetes erstes Geberelement vorgesehen, das bei Überstreichen eines fahrzeugfesten Sensors ein Signal generiert, das zum Bestimmen der Winkellage eines äußeren Reifenpunktes in bezug auf ein nabenfestes, d.h. umlaufendes Koordinatensystem verwendet werden kann. Das nabenfeste Koordinatensystem wird entweder durch einen zweiten Geber und einen zweiten fahrzeugfesten Sensor dargestellt oder durch einen an der Radnabe angeordneten ABS-Sensor des Fahrzeuges festgelegt.

Der Erfindung liegt die Aufgabe zugrunde, das von dem Sensor gelieferte Signal zur Ermittlung der Profiltiefe des Fahrzeugreifens am fahrenden Fahrzeug nutzbar zu machen.

Die Lösung der Aufgabe ist durch ein Verfahren zum Ermitteln der Profiltiefe eines Fahrzeugreifens am fahrenden Fahrzeug mit folgenden Schritten gekennzeichnet:

- Bestimmen eines Winkels eines äußeren Reifenpunktes in bezug auf ein nabenfestes Koordinatensystem, mittels eines fahrzeugfesten Sensors,

- Analysieren des von dem Sensor gelieferten, Oberschwingungen enthaltenden Signals und Bestimmen einer Eigenfrequenz, die dem Drehschwingungsanteil des Reifengürtels um die Felge entspricht,

- Berechnen des Massenträgheitsmomentes des Reifengürtels um die Drehachse aus der Drehsteifigkeit der Reifenwandung und der ermittelten Eigenfrequenz,

- Berechnen der aktuellen Masse und der Durchmesserveränderung des Reifens aus dem ermittelten Massenträgheitsmoment und der Massefunktion des Reifens in Abhängigkeit vom Durchmesser,

- Berechnen des Profilverlustes aus der Durchmesserveränderung.

Bei einer bevorzugten Ausführungsform des Verfahrens kann vorgesehen sein, daß die Drehsteifigkeit der Reifenwandung aus dem Winkel des äußeren Reifenpunktes in bezug auf das mit dem Rad umlaufende Koordinatensystem bei bekanntem Antriebsmoment und damit bekannter Umfangskraft des Reifens in einem beschreibbaren Fahrtzustand des Fahrzeuges bestimmt wird. Auf diese Weise wird vermieden, daß bei Reifenwechsel eine die Drehsteifigkeit der Reifenwandung beschreibende Größe manuell in einen Speicher einer fahrzeugseitig vorgesehenen Vorrichtung zum Durchführen des erfindungsgemäßen Verfahrens eingegeben werden muß.

Die Erfindung wird im folgenden anhand des in der einzigen Figur dargestellten Schemas näher erläutert.

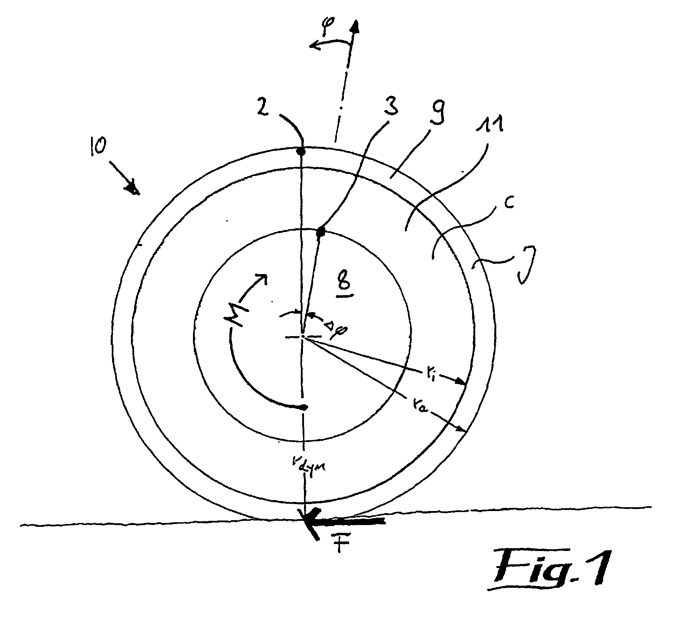

Figur 1 zeigt schematisch ein Fahrzeugrad 10.

An dem Rad 10 sind zwei radial beabstandete Geberelemente 2 und 3 befestigt, die mit nicht näher dargestellten, fahrzeugseitig fest angeordneten Sensoren zusammenarbeiten, wie dies in der DE 44 35 160 A1 beschrieben ist.

Das Geberelement 3 kann zur Definition eines mit der Nabe umlaufenden Koordinatensystems verwendet werden. Der zwischen zwei Radien der Geberelemente 2 und 3 eingeschlossene Winkel $\Delta_\varphi$ kann so als Winkellage $\varphi$ des Geberelementes 2 ausgedrückt werden.

Der Winkel $\Delta_\varphi$ bzw. die ausgelenkte Winkellage "$\varphi$" des äußeren Reifenpunktes bzw. Geberelementes 2 entsteht unter dem Einfluß des antreibenden Drehmoments M, das einen Gürtel 9 gegenüber der Felge 8 des Fahrzeugrades 10 verspannt. Die Verspannung ist abhängig von der Drehsteifigkeit c der Reifenwandung 11.

Nimmt man zur Vereinfachung an, daß die Reifenmasse im Gürtel 9 konzentriert ist, so läßt sich der Reifen schwingungstechnisch vergleichsweise einfach beschreiben. Der als fest angesehene Gürtel 9 kann Drehschwingungen um die Felge 8 vollziehen, wobei diese Drehschwingungen in dem Sensorsignal des dem Geberelement 2 zugeordneten Sensors wiedergefunden werden können.

Die Bewegung des fremderregten Drehschwingers in Form der Gürtellage 9 läßt sich grob wie folgt beschreiben:

$$J\ddot{\varphi}+c\varphi=\hat{M}*\cos\Omega t \qquad\qquad (1)$$

In Gleichung (1) ist J das Massenträgheitsmoment des Gürtels 9 um die Drehachse, mit zwei Punkten ($\ddot{\varphi}$) wird in gängiger Schreibweise die zweite Ableitung nach der Zeit bezeichnet, d.h. die Winkelbeschleunigung, c ist die Drehsteifigkeit der Reifenwandung 11, und die rechte Seite der Gleichung beschreibt eine Anregung mit einer Frequenz $\Omega$, die beispielsweise von den Ungleichförmigkeiten der das Fahrzeug antreibenden Brennkraftmaschine herrühren kann. Dabei ist die Dämpfung durch den Gummiwerkstoff vernachlässigt.

Betrachtet man nur den homogenen Teil der Lösung, so gilt:

$$J\ddot{\varphi} \; + \; c\varphi \; = \; 0 \qquad\qquad (2)$$

Es ist dies in bekannter Weise eine homogene lineare Differentialgleichung zweiter Ordnung mit konstanten Koeffizienten.

Der allgemeine Lösungsansatz

$$\varphi = A * \cos\omega t + B * \sin\omega t \qquad\qquad (3)$$

liefert mit der Eigenkreisfrequenz

$$\omega = \omega_0 = \sqrt{\frac{c}{J}} \qquad\qquad 4)$$

die allgemeine homogene Lösung.

Es ist bekannt, daß PkW-Reifen über eine ausgeprägte Torsions-Eigenfrequenz im Bereich zwischen 40 und 60 Hz verfügen. Mit Hilfe der Fourier-Analyse oder anderen mathematischen Methoden ist in dem vom Geber 2 gelieferten Signal eine Eigenfrequenz in den Oberschwingungen unzweifelhaft erkennbar, die die gesuchte Eigenfrequenz des Reifens ist.

Bei bekannter Drehfedersteifigkeit c der Reifenwandung 11 läßt sich damit über die berührungslos meßbare Eigenfrequenz das Massenträgheitsmoment des Gürtels 9 bestimmen, und aus einem sich verändernden Massenträgheitsmoment die Veränderung der Masse des Reifens sowie seiner ihn geometrisch beschreibenden Größen.

Um die Drehfedersteifigkeit c zu bestimmen, kann bei einem bekannt:en, d.h. beschreibbaren Fahrzustand des Fahrzeuges auf folgende Beziehung zurückgegriffen werden:

$$\hat{M}=F_{Rad}*r_{dyn}=c*\varphi \qquad\qquad (5)$$

Das antreibende Drehmoment kann an den Antriebswellen gemessen werden oder aber bei bekanntem Fahrzustand aus $F_{Rad}$ errechnet werden.

Das Massenträgheitsmoment des Gürtels 9 um die Drehachse kann unter der Annahme, daß der Gürtel als Hohlzylinder aufgefaßt wird, angegeben werden zu

$$J = m * \frac{(r_a^2 + r_i^2)}{2} \tag{6}$$

Betrachtet man zwei verschiedene Zustände, so gilt demgemäß

$$J_{alt} = m_{alt} * \frac{(r_{a/alt}^2 + r_i^2)}{2} \tag{7}$$

und

$$J_{neu} = m_{neu} * \frac{(r_{a/neu}^2 + r_i^2)}{2} \tag{8}$$

Weiterhin gilt

$$m_{neu} = m_{alt} - m_{Abrieb} \tag{9}$$

Für den Abrieb läßt sich in diffentieller Form schreiben:

$$dm_{Abrieb} = -\rho_{gummi} * f_R * b * 2\pi r * dr \tag{10}$$

In dieser Gleichung ist $\varrho$ die Dichte des Gummis, $f_R$ ist ein Formfaktor, um den Negativanteil des Profils zu berücksichtigen, b ist die Breite des Reifens, $2\pi r$ ist der Umfang in Abhängigkeit vom Radius und dr ist das Differential des Radius, d.h. der sich vermindernde Reifenradius.
Integrieren liefert:

$$m_{Abrieb} = -\rho_{gummi} * f_R * b * 2\pi r * \int_{r_{a/alt}}^{r_{a/neu}} r dr \tag{11}$$

und führt zu

$$m_{Abrieb} = -\rho_{gummi} * t_R * b * 2\pi r * \left( \frac{r_{a/alt}^2}{2} - \frac{r_{a/neu}^2}{2} \right) \tag{12}$$

Das beschriebene Gleichungssystem aus den Gleichungen 7, 8, 9 und 12 läßt sich nach $r_{a/neu}$ auflösen. Somit ist der Reifenverschleiß bzw. die abnehmende Profiltiefe bekannt. Während fabrikneue Reifen eine Profiltiefe von 8 bis 9 mm aufweisen, ist spätestens bei einer Profiltiefe von 1,6 mm ein Reifenwechsel angezeigt.
Will man die abnehmende Profiltiefe des Reifens bzw. den Reifenverschieiß mit einer Auflösung von 1 mm erfassen können, so läßt sich folgende Abschätzung geben: Ein 10 kg schwerer fabrikneuer Reifen verliert bei einem Abnehmen der Profiltiefe von 9 mm auf 8 mm ca. 200 g an Masse. Die Masse verringert sich also um 1/20. Die durch Gleichung 9 gegebene Eigenfrequenz verändert sich also um 1/40. Nimmt man die Eigenfrequenz $\omega_0$ wie zuvor bereits ausgeführt im Bereich von 40 bis 50 Hz an, so ist die Eigenfrequenz mit einer Auflösung von 1 Hz zu bestimmen. Versuche haben ergeben, daß dies mit den Mitteln der modernen Fourier-Analyse mit bordeigenen Vorrichtungen kostengünstig möglich ist.

**Patentansprüche**

1. Verfahren zum Ermitteln der Profiltiefe eines Fahrzeugreifens (10) am fahrenden Fahrzeug, mit folgenden Schritten:

   - Bestimmen eines Winkels ($\varphi$) eines äußeren Reifenpunktes (2) in bezug auf ein nabenfestes Koordinatensystem, mittels eines fahrzeugfesten Sensors,

   - Analysieren des von dem Sensor gelieferten, Oberschwingungen enthaltenden Signals und Bestimmen einer Eigenfrequenz ($\omega_0$), die dem Drehschwingungsanteil des Reifengürtels (9) um die Felge (8) entspricht,

   - Berechnen des Massenträgheitsmomentes (J) des Reifengürtels (9) um die Drehachse aus der Drehsteifigkeit (c) der Reifenwandung (11) und der ermittelten Eigenfrequenz ($\omega_0$),

   - Berechnen der aktuellen Masse (m) und der Durchmesserveränderung des Reifens aus dem ermittelten Massenträgheitsmoment (J) und der Massefunktion des Reifens in Abhängigkeit vom Durchmesser,

   - Berechnen des Profilverlustes aus der Durchmesserveränderung.

2. Verfahren nach Anspruch 1, **dadurch gekennzeichnet, daß** die Drehsteifigkeit (c) der Reifenwandung (11) aus dem Winkel ($\varphi$) des äußeren Reifenpunktes (2) in bezug auf das mit dem Rad umlaufende Koordinatensystem bei bekanntem Antriebsmoment und damit bekannter Umfangskraft (F) des Reifens in einem beschreibbaren Fahrzustand des Fahrzeuges bestimmt wird.

**Claims**

1. Method of detecting the tread depth of a vehicle tyre (10) on the travelling vehicle, said method having the following steps:

   - determining an angle ($\varphi$) of an outer tyre point (2) relative to a co-ordinate system secured to the hub, by means of a sensor secured to the vehicle,

   - analysing the signal, which is supplied by the sensor and contains harmonic vibrations, and determining an inherent frequency ($\omega_0$), which corresponds to the proportion of rotational vibrations of the tyre belt (9) around the rim (8),

   - calculating the inertia moment (J) of the tyre belt (9) about the axis of rotation from the resistance to rotation (c) of the tyre wall (11) and the detected inherent frequency ($\omega_0$),

   - calculating the actual mass (m) and the change in diameter of the tyre from the detected inertia moment (J) and the mass function of the tyre in dependence on the diameter, and

   - calculating the tread loss from the change in diameter.

2. Method according to claim 1, **characterised in that** the resistance to rotation (c) of the tyre wall (11) is determined from the angle ($\varphi$) of the outer tyre point (2) relative to the co-ordinate system, which rotates with the wheel, at a known driving moment and, hence, at a known circumferential force (F) of the tyre in a describable state of travel of the vehicle.

**Revendications**

1. Procédé de détermination de la profondeur des sculptures d'un pneumatique (10) d'un véhicule en circulation, comprenant les étapes suivantes consistant :

   - à déterminer, au moyen d'un capteur fixé sur le véhicule, un angle ($\varphi$) d'un point extérieur (2) du pneu par rapport à un système de coordonnées fixé sur le moyeu,

- à analyser le signal contenant des vibrations harmoniques, fourni par le capteur, et à déterminer une fréquence propre ($\omega_0$) qui correspond à la partie de vibrations de torsion de la nappe d'armature (9) du pneu, autour de la jante (8).
- à calculer le moment d'inertie (J) de la nappe d'armature (9) du pneu autour de l'axe de rotation, d'après la résistance à la torsion (c) de la paroi (11) du pneu et d'après la fréquence propre ($\omega_0$) calculée,
- à calculer la masse réelle (m) et la modification de diamètre du pneu d'après le moment d'inertie (J) calculé et d'après la fonction de masse du pneu, en fonction du diamètre,
- à calculer la perte de structure d'après la modification du diamètre.

2. Procédé selon la revendication 1, **caractérisé en ce que** la résistance à la torsion (c) de la paroi (11) du pneu est déterminée, dans un état de conduite descriptible du véhicule, d'après l'angle ($\varphi$) du point extérieur (2) du pneu par rapport au système de coordonnées tournant avec la roue, dans le cas d'un couple d'entraînement connu et donc d'une force périphérique connue (F) du pneu.

Fig.1